(19) Europäisches Patentamt / European Patent Office / Office européen des brevets

(11) **EP 2 116 732 A1**

(12) **EUROPEAN PATENT APPLICATION**
published in accordance with Art. 153(4) EPC

(43) Date of publication:
**11.11.2009 Bulletin 2009/46**

(51) Int Cl.:
***F16C 32/04*** *(2006.01)*

(21) Application number: **08710896.5**

(22) Date of filing: **07.02.2008**

(86) International application number:
**PCT/JP2008/052006**

(87) International publication number:
**WO 2008/096805 (14.08.2008 Gazette 2008/33)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **09.02.2007 JP 2007030860**

(71) Applicant: **IHI Corporation**
**Tokyo 135-8710 (JP)**

(72) Inventors:
• **SAITO, Osamu**
  **Koto-ku**
  **Tokyo 135-8710 (JP)**

• **KUWATA, Gen**
  **Koto-ku**
  **Tokyo 135-8710 (JP)**

(74) Representative: **Grünecker, Kinkeldey,**
**Stockmair & Schwanhäusser**
**Anwaltssozietät**
**Leopoldstrasse 4**
**80802 München (DE)**

(54) **MAGNETIC BEARING DEVICE**

(57)    A magnetic bearing device has a rotating shaft (3) and a bearing structure (5) for supporting the rotating shaft by a magnetic force. The bearing structure (5) has magnetic pole portions (7) facing an outer circumferential surface of the rotating shaft (3) and surrounding the rotating shaft (3), and supports the rotating shaft (3) in a non-contact manner by a magnetic force generated between the magnetic pole portions (7) and the rotating shaft (3). A depression (9) is formed in the surface of the rotating shaft. At least one of a shape, a position, and the number of the depressions (9) is set so as to suppress an eddy current on the surface of the rotating shaft (3) that is generated by rotation of the rotating shaft (3) and by a magnetic field caused by the magnetic pole portions (7).

FIG. 6B

**Description**

BACKGROUND OF THE INVENTION

Technical Field of the Invention

The present invention relates to a magnetic bearing device.

Description of the Related Art

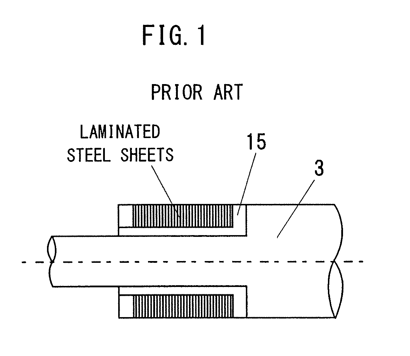

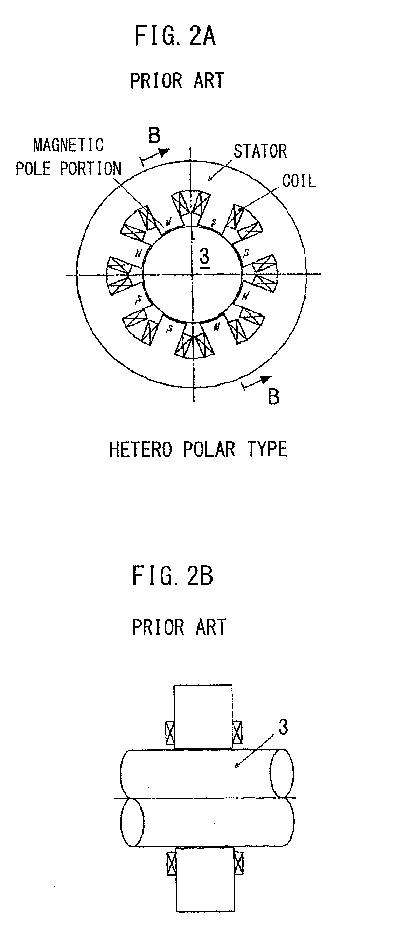

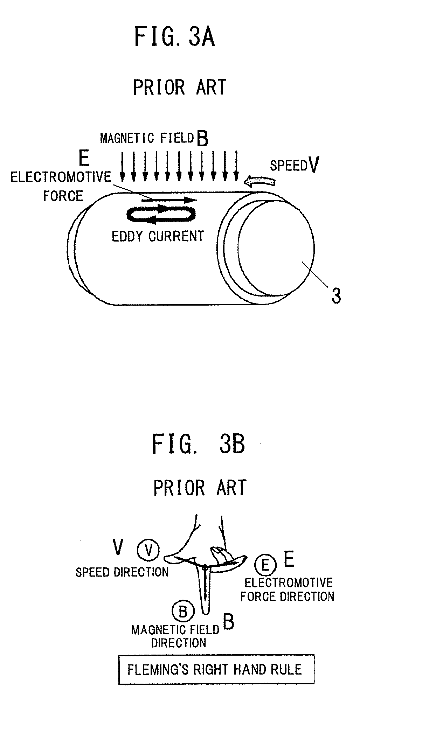

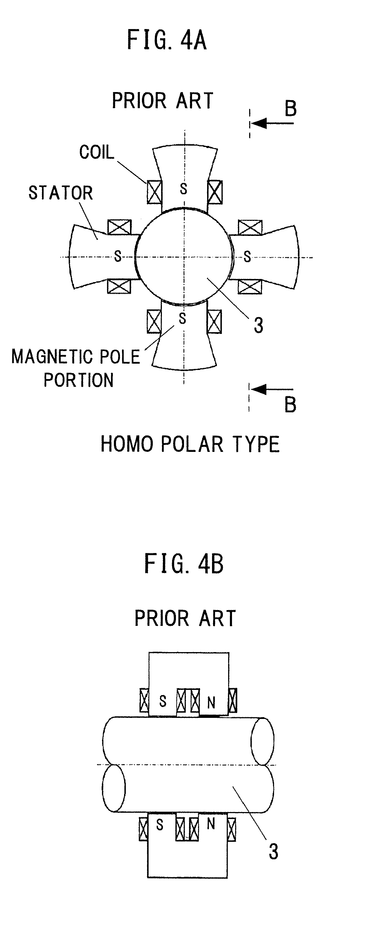

A magnetic bearing device has a rotating shaft that is a rotor, and a bearing structure that is a stator which surrounds the rotating shaft and supports the rotating shaft in a non-contact manner by a magnetic force.
The rotating shaft is formed using a magnetic material, and is, for example, a rotating shaft of a turbo compressor, an ultra-low temperature rotary machine, a turbo charger, a flywheel, or the like which rotates at high speed. As the types of the rotating shaft, there are a laminated type using laminated steel sheets, and a solid type. In the laminated type rotating shaft, as shown in Fig. 1, a magnetic-pole-facing-portion of the rotating shaft 3 is provided with a sleeve 15, and the laminated steel sheets are fixed to the rotating shaft 3 via the sleeve 15. Electric resistance of the laminated steel sheets is increased by making silicon contained in the laminated steel sheets. Additionally, thin steel sheets having a thickness of an approximately 0.1 to 0.5 mm are laminated via an insulating layer. This keeps an eddy current from being generated in the surface of the rotating shaft. However, since mechanical strength is low in the laminated type rotating shaft, it is known that the circumferential speed of the rotating shaft is limited to approximately 200 m/s.
In the solid type rotating shaft, the rotating shaft is made only of a shaft material without using the above laminated steel sheets. Thus, it is also possible to cope with high rigidity and high circumferential speed. On the other hand, in the solid type rotating shaft, an eddy current is easily generated in the surface of the rotating shaft, and an eddy current loss becomes significantly high. Therefore, generally, the solid rotating shaft is not used.
The bearing structure has a plurality of magnetic pole portions arranged in a circumferential direction so as to surround the rotating shaft. The rotating shaft is supported in a non-contact manner in which magnetic flux is generated from the magnetic pole portions toward the rotating shaft which is rotating at high speed to float the rotating shaft by an electromagnetic attracting force. As such a bearing structure, there are a hetero-polar bearing structure and a homo-polar bearing structure.
The hetero-polar bearing structure has the magnetic-pole-shape that is most generally adopted because of easiness in manufacturing. Figs. 2A and 2B illustrate a hetero-polar bearing structure, and Fig. 2B is a sectional view taken along a line B-B of Fig. 2A. As shown in Figs. 2A and 2B, N-pole portions and S-pole portions are alternately arranged in a circumferential direction. In this case, a magnetic field which extends to the surface of the rotating shaft 3 from an N-pole portion or an S-pole portion is substantially orthogonal to the axial direction of the rotating shaft 3 on the surface of the rotating shaft 3. Therefore, like Figs. 3A and 3B, from the Fleming's right-hand rule, an electromotive force is generated in the axial direction of the rotating shaft 3 in the surface of the rotating shaft 3 which rotates under the existence of a magnetic field. The directions of this electromotive force in a portion facing an N-pole portion and in a portion facing an S-pole portion becomes opposite to each other. As a result, an eddy current is generated in the surface of the rotating shaft 3 by this electromotive force.
The homo-polar bearing structure is shown in Figs. 4A and 4B, and has an N-pole portions and an S-pole portions that are lined up in the axial direction. The same pole portions are lined up in the circumferential direction. Accordingly, even if an electromotive force is generated in the axial direction of the rotating shaft 3 in the surface of the rotating shaft 3 by a magnetic field extending to the surface of the rotating shaft from a magnetic pole portion, the directions of this electromotive force become the same in different circumferential positions. Thus, the eddy current of the homo-polar bearing structure becomes smaller than that of the hetero-polar bearing structure. However, in practice, the strength difference of a magnetic field occurs between a portion with a magnetic pole portion and a portion with no magnetic pole portion. Thus, an eddy current is generated by an electric current which flows to the portion with a locally weak magnetic field from the portion with a locally strong magnetic field. That is, an electromotive force which causes generation of an eddy current is shown by the following Formula (1). Even when magnetic flux density (magnetic field B) is small, a large eddy current will be generated even in the homo-polar bearing structure at the time of high-speed rotation.

$$e \propto B \cdot v \cdot L \qquad (1)$$

e: electromotive force, B: magnetic flux density, v: speed of traversing magnetic field, and L: length of conductor
As described above, conventionally, when the laminated type rotating shaft is not used, even the homo-polar bearing structure has a problem that the eddy current generated on the surface of the rotating shaft cannot be sufficiently reduced.
Therefore, a magnetic bearing device which can solve the problem that an eddy current is generated on the surface of the rotating shaft is expected, without using the laminated type rotating shaft. Such a magnetic bearing device is described in Patent Document 1 specified below.
Figs. 5A and 5B show the configuration of the magnetic bearing device of Patent Document 1. Fig. 5B is a sectional view taken along a line B-B of Fig. 5A. In Patent Document 1, in a homo-polar magnetic bearing device, connecting portions 11 are provided to integrally connect adjacent N-poles in a circumferential direction and integrally connect adjacent S-poles in a circumferential direction, or magnetic bodies made of different material are provided to integrally connect adjacent N-poles in a circumferential direction and integrally connect adjacent S-poles in a circumferential direction. This increases the magnetic flux density in an intermediate position of adjacent N-poles (and S-poles), and reduce strength difference of magnetic flux density in the circumferential direction, suppressing generation of an eddy current.

Patent Document 1: Japanese Patent Application Laid-Open No. 2001-271836 (Magnetic Bearing Device)

It is still more desirable if the eddy current in the surface of the rotating shaft can be significantly reduced by simple machining without using the laminated bearing structure.

SUMMARY OF THE INVENTION

Thus, an object of the present invention is to provide a magnetic bearing device which can significantly reduce an eddy current in the surface of a rotating shaft by simple machining by technical means different from Patent Document 1, without using laminated steel sheets.

In order to solve the above problems, according to the present invention, a magnetic bearing device comprising a rotating shaft and a bearing structure for supporting the rotating shaft by a magnetic force, wherein the bearing structure has magnetic pole portions facing an outer circumferential surface of the rotating shaft and surrounding the rotating shaft, and supports the rotating shaft in a non-contact manner by a magnetic force generated between the magnetic pole portions and the rotating shaft, a depression is formed in the surface of the rotating shaft, and at least one of a shape, a position, and the number of the depressions is set so as to suppress an eddy current on the surface of the rotating shaft that is generated by rotation of the rotating shaft and by a magnetic field caused by the magnetic pole portions.

In the above configuration, an eddy current is suppressed by forming the depression in the rotating shaft. Accordingly, an eddy current can be significantly reduced by simple machining without using laminated steel sheets. That is, in the present invention, the depression is formed by performing depression machining on the surface of the integrally formed rotating shaft to suppress an eddy current. Thus, it becomes possible to significantly reduce an eddy current using a solid rotating shaft on which depression machining is performed.

According to a preferred embodiment of the present invention, one or a plurality of grooves is formed as the depression so as to extend in the circumferential direction in the portion of the surface of the rotating shaft which faces the magnetic pole portions. For example, in a homo-polar bearing structure in which the magnetic pole portions includes an S-pole portions and an N-pole portions that are lined up in the axial direction of the rotating shaft, one or a plurality of the grooves is formed in the circumferential direction in the portion facing the S-pole portion and the portion facing the N-pole portion, in the surface of the rotating shaft.

In the above configuration, since one or more grooves are formed in the circumferential direction in the portions of the surface of the rotating shaft facing the magnetic pole portions, an eddy current can be effectively interrupted, and the eddy current can be significantly reduced.

Additionally, according to a preferred embodiment of the present invention, a depth of the depression is at least approximately the skin depth of the rotating shaft.

In the above configuration, since the depth of the depressions is at least approximately the skin depth of the rotating shaft that is a depth where an eddy current flows, an eddy current can be effectively interrupted, and the eddy current can be significantly reduced.

According to the above-described invention, an eddy current in the surface of the rotating shaft can be significantly reduced by simple machining without using the laminated bearing structure.

BRIEF DESCRIPTION OF THE DRAWINGS

Fig. 1 is an example of a configuration diagram of a laminated type rotating shaft.
Fig. 2A is a view illustrating a hetero-polar bearing structure.
Fig. 2B is a sectional view taken along a line B-B of Fig. 2A.
Fig. 3A is an explanatory view of an eddy current generation principle in the hetero-polar bearing structure.
Fig. 3B is an explanatory view illustrating the Fleming's right-hand rule about Fig. 3A.
Fig. 4A is a view illustrating a homo-polar bearing structure.
Fig. 4B is a view as seen from the direction shown by arrows B-B of Fig. 4A.
Fig. 5A is a configuration diagram of a magnetic bearing device of Patent Document 1.
Fig. 5B is a sectional view taken along a line B-B of Fig. 5A.
Fig. 6A is a configuration diagram of a magnetic bearing device according to an embodiment of the present invention.
Fig. 6B is a view as seen from the direction shown by arrows B-B of Fig. 6A.
Fig. 7 is a partially enlarged perspective view illustrating the grooves according to the embodiment of the present invention.

Fig. 8 is a partially enlarged sectional view illustrating the grooves according to the embodiment of the present invention.

Fig. 9 shows an eddy current on the surface of the rotating shaft that was obtained by a simulation when the grooves according to the embodiment of the present invention is formed.

Fig. 10 shows an eddy current on the surface of the rotating shaft that was obtained by a simulation when the grooves according to the embodiment of the present invention is not formed.

Fig. 11 is a view illustrating attracting forces when grooves are formed and when any groove is not formed.

Fig. 12 is a view illustrating eddy current losses when grooves are formed and when any groove is not formed.

Fig. 13A is a view illustrating the stress generated in a rotating disk with no central hole.

Fig. 13B is a view illustrating the stress generated in a rotating disk with a central hole.

Fig. 14 is a view illustrating depressions according to another embodiment of the present invention.

## DESCRIPTION OF THE PREFERRED EMBODIMENT

Hereinafter, the best embodiment for carrying out the present invention will be described with reference to the drawing. Additionally, in the respective drawings, the same reference numerals are given to common portions, and duplicate description is omitted.

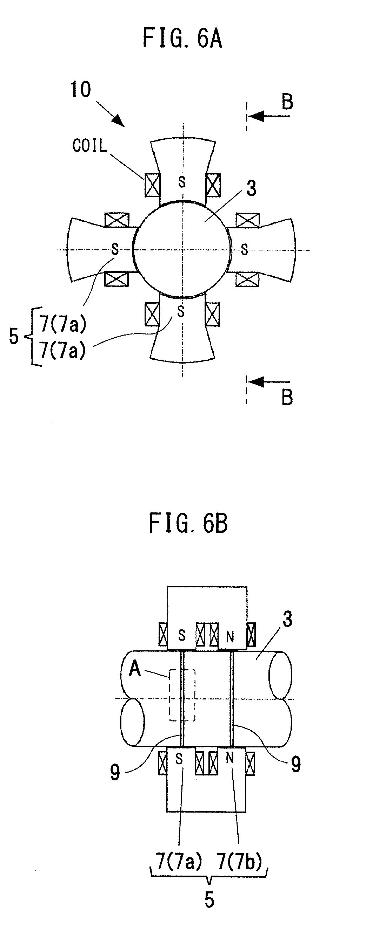

Fig. 6A and Fig. 6B correspond to Fig. 4A and Fig. 4B, respectively, but show a magnetic bearing device 10 according to an embodiment of the present invention. Fig. 6B is a view as seen from the direction shown by arrows B-B of Fig. 6A. The magnetic bearing device 10 has a rotating shaft 3 of a turbo compressor, and a bearing structure 5 which supports the rotating shaft 3 by a magnetic force. The bearing structure 5 has magnetic pole portions 7 facing an outer circumferential surface of the rotating shaft 3, and surrounding the rotating shaft 3, and is configured so as to support the rotating shaft 3 in a non-contact manner by magnetic forces (magnetic forces caused by the magnetic field extending to the rotating shaft 3 from the magnetic pole portions 7 or extending to the magnetic pole portions 7 from the rotating shaft 3) generated between the magnetic pole portions 7 and the rotating shaft 3. The rotating shaft 3 is made of a magnetic material (preferably, a soft magnetic material), and for example, the rotating shaft 3 may be formed of steel or iron. However, the rotating shaft 3 may be made of other suitable magnetic materials so as to be supported in a non-contact manner by a magnetic force.

In the example of Figs. 6A and 6B, the bearing structure 5 is a homo-polar bearing structure. That is, as shown in Figs. 6A and 6B, the magnetic pole portions 7 includes an S-pole portion 7a and an N-pole portion 7b, and the bearing structure 5 is formed so that the S-pole portions 7a and the N-pole portions 7b are lined up in the axial direction of the rotating shaft 3.

According to this embodiment, a depression 9 is formed in the surface of the rotating shaft, and at least one of the shape, the position, and the number of the depressions 9 is set up so as to suppress an eddy current on the surface of the rotating shaft that is generated by the rotation of the rotating shaft 3 and a magnetic field caused by the magnetic pole portions 7.

Additionally, according to this embodiment, the depressions 9 are one or a plurality of grooves which is formed so as to extend in the circumferential direction in the portions of the surface of the rotating shaft facing the magnetic pole portions. That is, the groove 9 is formed in the circumferential direction in one or a plurality of axial positions of the rotating shaft 3 facing the pole portions 7a and 7b, respectively. In the example of Figs. 6A and 6B, one groove 9 is formed in the portion facing the pole portions 7a and in the portion facing the N-pole portions 7b such that each groove 9 completely circles the rotating shaft 3 in the circumferential direction. As will be described later, an eddy current generated on the surface of the rotating shaft 3 when there is no groove 9 is interrupted and divided by the grooves 9, so that the eddy current can be made small, and the value thereof can be significantly reduced.

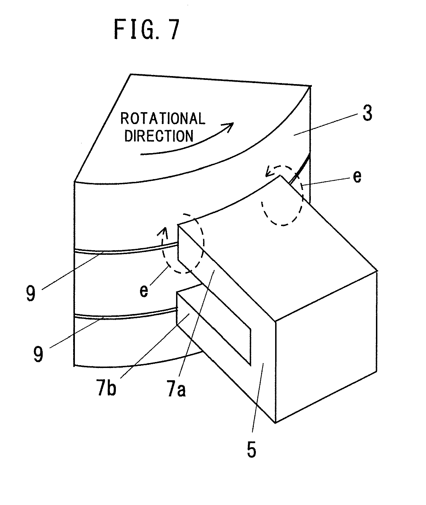

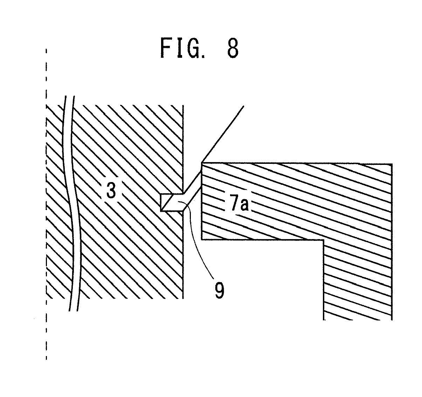

Fig. 7 is a partially enlarged perspective view illustrating the groove 9 according to this embodiment, and Fig. 8 is a partially enlarged sectional view illustrating the groove 9. The eddy current e shown by a broken line arrow of Fig. 7 is generated on the surface of the rotating shaft 3 when the grooves 9 are not provided. In addition, in Figs. 6B to 8, in order to make the grooves easily understood, the dimension of the groove 9 is shown in an enlarged manner. In practice, the dimension of the grooves 9 may be smaller than those shown in Fig. 6B and 7.

According to this embodiment, the depth of the groove 9 is at least approximately the skin depth of the rotating shaft 3. Here, the skin depth will be described briefly. That is, when the frequency (fluctuation frequency of a magnetic field which acts on the rotating shaft 3 in this embodiment) of a signal which is transmitted through a conductor (rotating shaft 3 in this embodiment) becomes high, an electric current concentrates on the surface of the conductor from the inside of the conductor by the skin effect, and the depth to which this electric current flow by the skin effect is called the skin depth.

The skin depth δ is expressed by the following formula.

$$\delta = \sqrt{\frac{2}{\omega \mu_0 \mu_r \sigma}}\,[m]$$

Here, ω is the angular frequency of an electric current which flows through the conductor, $\mu_r$ is the relative magnetic permeability of the conductor, $\mu_0$ is magnetic permeability in vacuum, and σ is the electric conductivity of the conductor.

In this embodiment, since the skin depth of the rotating shaft 3 can be set to approximately 1 mm, or 1 mm or less, an eddy current can be effectively suppressed by setting the depth of the grooves 9 to approximately 1 mm, or 1 mm or less. For example, when the rotating shaft 3 is formed of AISI4140 (i.e., chrome molybdenum steel) having the relative magnetic permeability of 3300, and the electric conductivity of 2352941 (S/m), the skin depth of AISI4140 becomes 0.81 mm at the frequency of 50 Hz, and increases with the increase of frequency. That is, the skin depth becomes 6 $\mu$m at a frequency of 1 x $10^6$ Hz, and becomes 4 $\mu$m at a frequency of 2.5 x $10^6$ Hz. According to this embodiment, when the solid rotating shaft is formed using AISI4140, and the rotating shaft is rotated at high speed so that the frequency becomes 1 x $10^6$ Hz to 2.5 x $10^6$ Hz, the depth of the grooves 9 may be approximately 6 $\mu$m. In addition, as long as an eddy current can be suppressed by providing the grooves 9, the material of the rotating shaft 3 is limited to steel, and may be other suitable one such as iron.

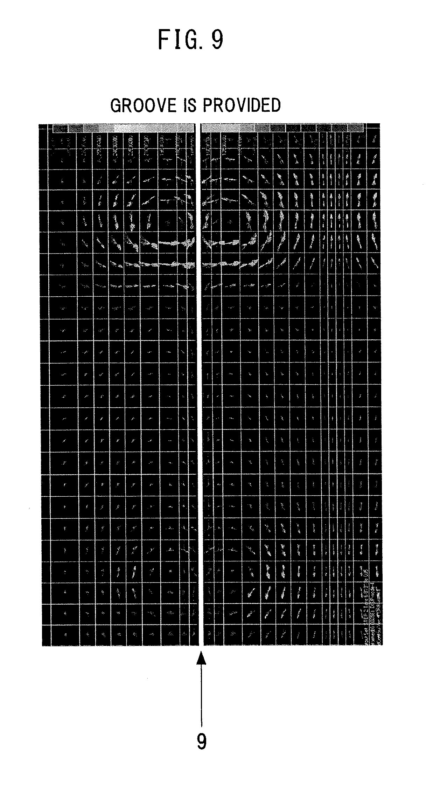

Additionally, as can be seen from Formula 1, the skin depth becomes smaller as the rotating speed of the rotating shaft 3 becomes high speed. Thus, when the rotating shaft as a target rotates at higher speed, it becomes possible to suppress an eddy current only by forming minuter groove 9. In addition, the width of the grooves 9 is such a size that an eddy current can be suppressed. That is, it is preferable that the width of the grooves is equal to the depth of the grooves 9, or even if the width of the grooves is more than the depth of the grooves 9, it is such a size that an eddy current can be interrupted and divided like Fig. 9 which will be described later.

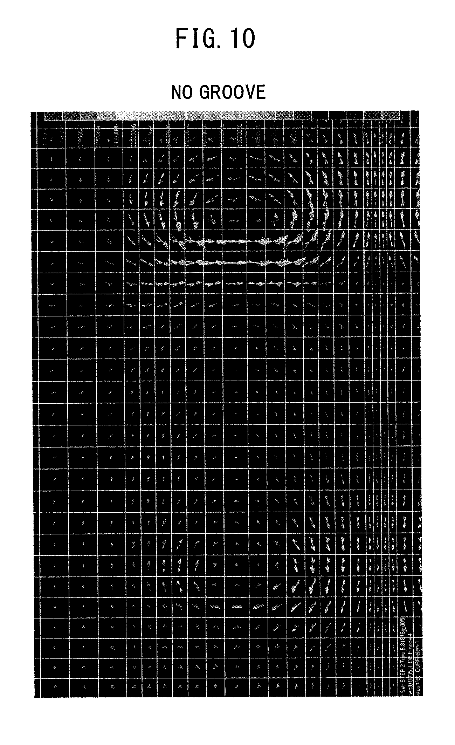

Fig. 9 shows an eddy current on the surface of the rotating shaft 3 that is obtained by the simulation when the groove 9 is formed like Fig. 6B. In addition, Fig. 9 is a portion shown by a broken line A of Fig. 6B. Fig. 10 shows a simulation result when the grooves 9 corresponding to Fig. 9 are not formed. As shown in Fig. 9, the eddy current is made small by interrupting and dividing the eddy current. As can be seen from Fig. 9, the eddy current is reduced as compared with Fig. 10. In addition, although not clearly recognized from Fig. 10, according to the simulation result, the eddy current density in Fig. 9 is reduced greatly from the eddy current density in Fig. 10 even in each portion on the surface of the rotating shaft 3.

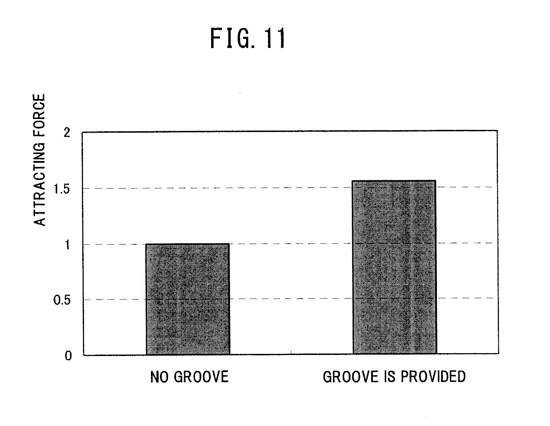

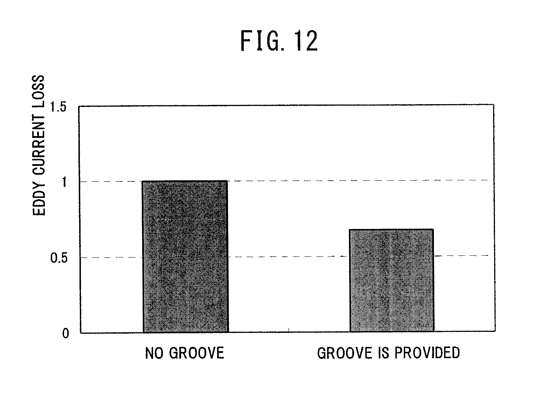

Additionally, Figs. 11 and 12 show simulation results when the grooves 9 are formed like Figs. 6B and 7 and when the grooves 9 are not formed in Figs. 6B and 7. In Fig. 11, the axis of ordinate represents the force by which the magnetic pole portions 7 attracts the rotating shaft 3, that is, represents the attracting force when there are the grooves 9 relative to the attracting force when there is no groove. In Fig. 12, the axis of ordinate represents the eddy current loss (the loss caused by an eddy current), that is, represents the eddy current loss when there are the grooves 9 relative to the eddy current loss when there is no groove. As can be seen from Figs. 11 and 12, it is possible to provide the grooves 9 to significantly improve the force by which the magnetic pole portions 7 attract the rotating shaft 3, and it is possible to significantly reduce an eddy current. In addition, although the unit of an eddy current loss is W, the eddy current loss is made dimensionless in Fig. 12.

As such, from the results of Fig. 11 or 12, only by forming one groove 9 in the portion of the surface of the rotating shaft 3 facing the magnetic pole portions 7, it is possible to significantly improve the force by which the magnetic pole portions 7 attract the rotating shaft 3, and it is possible to significantly reduce an eddy current.

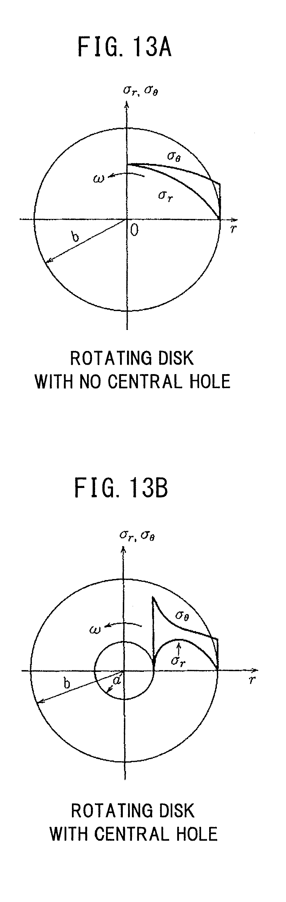

As described above, the depth of the groove 9 may be approximately the skin depth of the rotating shaft 3. In this case, the strength of the rotating shaft 3 hardly deteriorates. According to material mechanics, the stress generated in the rotating shaft 3 which rotates becomes minimum at the outermost external diameter (i.e., surface) of the rotating shaft 3 when there is no cavity inside the rotating shaft 3 or when there is a cavity inside the rotating shaft 3 (for example, a cylindrical rotating shaft). For example, Figs. 13A and 13B are views selected from 60th page of the basic edition α3 of the mechanical engineering handbook of JSME. In Figs. 13A and 13B, $\sigma_r$ is a stress in a radial direction which is generated in a rotating disk, and $\sigma_\theta$ is a stress in a circumferential direction which is generated in the rotating disk. As can be seen from Figs. 13A and 13B, the stress distribution of the rotating disk becomes minimum at the outermost external diameter of the disk. Accordingly, the grooves 9 are formed by making the depth of the grooves 9 as small as the skin depth so that the strength of the rotating shaft 3 hardly deteriorates. As a result, the circumferential speed of the rotating shaft can be set to 280 m/s or more. In addition, even if the depth of the grooves 9 are set to be equal to or more than the skin depth of the rotating shaft 3, the depth of the grooves can be set to such a depth that the strength of the rotating shaft 3 hardly deteriorates, or the rotation of the rotating shaft 3 is not influenced.

According to the magnetic bearing device 10 of this embodiment described above, an eddy current is suppressed by forming the grooves 9 in the rotating shaft 3. Thus, an eddy current can be significantly reduced by simple machining without using laminated steel sheets. That is, in this embodiment, the grooves 9 are formed by cutting out the surface of the integrally formed rotating shaft 3 to suppress an eddy current. Thus, it becomes possible to significantly reduce an eddy current using the solid rotating shaft 3. Additionally, since one or more grooves 9 are formed in the circumferential direction in the portions of the surface of the rotating shaft 3 facing the magnetic pole portions 7, an eddy current can be effectively interrupted. Additionally, since the depth of the grooves 9 is set to at least the skin depth of the rotating shaft 3, an eddy current can be effectively interrupted. Accordingly, the grooves 9 are formed by setting the depth of the grooves 9 to the skin depth, so that the strength of the rotating shaft 3 hardly deteriorate.

[Other Embodiments]

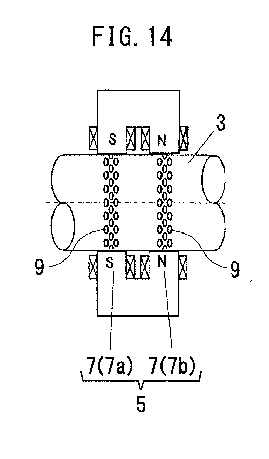

Additionally, according to another embodiment of the present invention, a plurality of depressions 9 is formed in the portion of the surface of the rotating shaft 3 facing the magnetic pole portions 7. This can increase the resistance of an eddy current which flows in the surface of the rotating shaft 3, thereby suppressing an eddy current. Preferably, as shown in Fig. 14, a number of depressions are arranged in stagger (in other words, in a zigzag pattern) in the portions of the surface of the rotating shaft 3 facing the magnetic pole portions. The resistance of an eddy current can be significantly increased by the depressions 9 which are densely formed in this way, and as a result, an eddy current can be significantly suppressed. The depth of the depressions 9 is the same as that of the grooves 9, and is approximately the skin depth of the rotating shaft 3. The other effects of this embodiment are the same as those of the grooves 9, and can also interrupt and divide an eddy current by a number of depressions 9. Additionally, the shape of the depressions 9 is not limited to the shape shown in Fig. 14, but may be other shapes.

In addition, it is natural that the present invention is not limited to the above-described embodiments, but various modifications may be made without departing from the spirit and scope of the present invention.

For example, although the case where the depressions 9 are applied to the magnetic bearing device 10 having the homo-polar bearing structure 5 has been described in the above embodiments, the present invention is not limited thereto, but the depressions may be formed in a magnetic bearing device having a hetero-polar bearing unit.

When the grooves 9 are formed in the circumferential direction, the grooves 9 do not necessarily have to completely circle the rotating shaft 3 if an eddy current generated on the surface of the rotating shaft 3 when there is no groove 9 is interrupted and divided. For example, grooves 9 which extend in the circumferential direction, but do not completely circle the rotating shaft 3 may be provided in a plurality of adjacent axial positions such that the grooves 9 differs from each other in the circumferential position where the groove 9 does not exist. Thereby, these grooves 9 can interrupt and divide an eddy current generated on the surface of the rotating shaft 3 when there is no groove 9.

Additionally, in the above-described embodiments, the grooves 9 are formed in the circumferential direction of the rotating shaft 3. However the present invention is not limited thereto but one or a plurality of grooves may be formed in the axial direction of the rotating shaft 3 in the surface of the rotating shaft 3.

Although the number of the magnetic pole portions arranged in the circumferential direction is four in the above-described embodiments, other suitable number of magnetic pole portions may be arranged in the circumferential direction. In this case, more magnetic pole portions may be arranged in the circumferential direction than those of the above-mentioned embodiments to be multi-polarized.

Additionally, although the case where the present invention is applied to the rotating shaft 3 of the turbo compressor which rotates at high speed has been described in the above-described embodiments, the present invention is not limited to this, but the present invention may be applied to other rotating shafts which are supported by a magnetic force and which rotate at high speed to generate an eddy current.

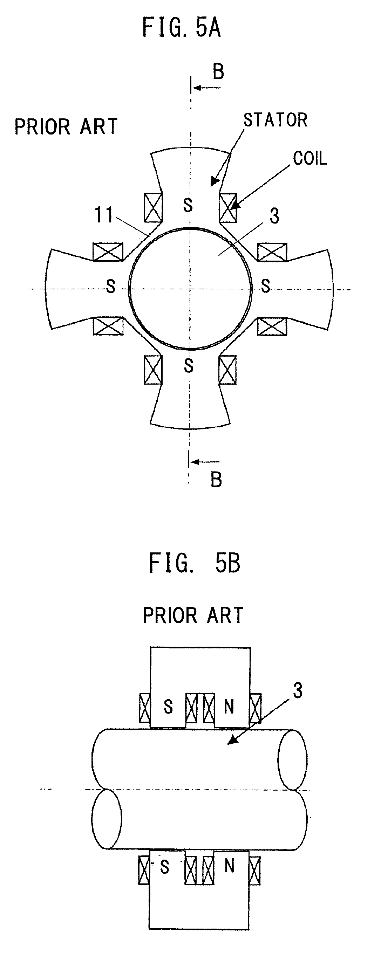

In addition, the grooves on the present invention may be applied to the magnetic bearing device of Patent Document 1. In this case, in Figs. 5A and 5B, it is preferable to set the shape and dimension (for example, thickness of the connecting portion 11) of the connecting portion of Fig. 5A and Fig. 5B such that magnetic saturation occurs in the connecting portion 11 coupling adjacent poles, and leakage of a magnetic flux may not occur through the connecting portion 11 from one pole to the pole adjacent thereto. The thickness of the connecting portion 11 is a thickness vertical to in a direction in which the connecting portion 11 extends from one pole to another pole adjacent thereto. Additionally, as for the setting of the shape and dimension of the connecting portion 11, the shape and dimension of the connecting portion 11 can be set as described above by performing simulation of magnetic field analysis on the basis of the setting value of an electric current which flows into the coil. In order to make uniform the magnetic flux density distribution appearing in the rotor, it is desirable that a region where magnetic saturation occurs in the adjacent portion is smaller. However, if the region is smaller than a gap between the pole and the rotor, a magnetic flux required for control leaks to the adjacent magnetic flux. For this reason, it is necessary to make the region where magnetic saturation occurs larger than the gap between the pole and the rotor in order to prevent. As an example, the shape and dimension of the connecting portion 11 may be set as described above without forming the above grooves.

**Claims**

1. A magnetic bearing device comprising a rotating shaft and a bearing structure for supporting the rotating shaft by a magnetic force, wherein the bearing structure has magnetic pole portions facing an outer circumferential surface of the rotating shaft and surrounding the rotating shaft, and supports the rotating shaft in a non-contact manner by a magnetic force generated between the magnetic pole portions and the rotating shaft,
a depression is formed in the surface of the rotating shaft, and
at least one of a shape, a position, and the number of the depressions is set so as to suppress an eddy current on the surface of the rotating shaft that is generated by rotation of the rotating shaft and by a magnetic field caused by the magnetic pole portions.

2. The magnetic bearing device according to claim 1, wherein one or a plurality of grooves is formed as the depression so as to extend in the circumferential direction in the portion of the surface of the rotating shaft which faces the magnetic pole portions.

3. The magnetic bearing device according to claim 1, wherein a depth of the depression is at least approximately the skin depth of the rotating shaft.

# FIG. 1

## PRIOR ART

LAMINATED
STEEL SHEETS

15

3

# FIG. 2A

PRIOR ART

MAGNETIC
POLE PORTION

B

STATOR

COIL

3

B

HETERO POLAR TYPE

# FIG. 2B

PRIOR ART

3

# FIG. 3A

## PRIOR ART

MAGNETIC FIELD B

E
ELECTROMOTIVE
FORCE

SPEED V

EDDY CURRENT

3

# FIG. 3B

## PRIOR ART

V
SPEED DIRECTION

E
ELECTROMOTIVE
FORCE DIRECTION

B
MAGNETIC FIELD
DIRECTION

FLEMING'S RIGHT HAND RULE

# FIG. 4A

PRIOR ART

COIL

STATOR

MAGNETIC POLE
PORTION

HOMO POLAR TYPE

# FIG. 4B

PRIOR ART

# FIG. 5A

B

PRIOR ART

STATOR

COIL

11

S

3

S

S

S

B

# FIG. 5B

PRIOR ART

S  N

3

S  N

# FIG. 6A

# FIG. 6B

FIG. 7

ROTATIONAL
DIRECTION

3

e

9

9

e

7b    7a

5

FIG. 8

# FIG. 9

GROOVE IS PROVIDED

9

# FIG. 10

## NO GROOVE

# FIG. 11

FIG. 12

## FIG. 13A

ROTATING DISK
WITH NO CENTRAL HOLE

## FIG. 13B

ROTATING DISK
WITH CENTRAL HOLE

FIG. 14

<table>
<tr><td colspan="2"><strong>INTERNATIONAL SEARCH REPORT</strong></td><td>International application No.<br>PCT/JP2008/052006</td></tr>
</table>

| A. CLASSIFICATION OF SUBJECT MATTER |
|---|
| *F16C32/04(2006.01)i* |

According to International Patent Classification (IPC) or to both national classification and IPC

| B. FIELDS SEARCHED |
|---|
| Minimum documentation searched (classification system followed by classification symbols)<br>F16C32/00-32/06 |

Documentation searched other than minimum documentation to the extent that such documents are included in the fields searched

| Jitsuyo Shinan Koho | 1922-1996 | Jitsuyo Shinan Toroku Koho | 1996-2008 |
|---|---|---|---|
| Kokai Jitsuyo Shinan Koho | 1971-2008 | Toroku Jitsuyo Shinan Koho | 1994-2008 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2000-283158 A (NSK Ltd.),<br>13 October, 2000 (13.10.00),<br>Claim 1; Par. Nos. [0016], [0018]<br>(Family: none) | 1-3 |
| A | JP 2002-031135 A (Ishikawajima-Harima Heavy Industries Co., Ltd.),<br>31 January, 2002 (31.01.02),<br>Fig. 1<br>(Family: none) | 1-3 |
| A | JP 2001-271836 A (Ishikawajima-Harima Heavy Industries Co., Ltd.),<br>05 October, 2001 (05.10.01),<br>Par. Nos. [0001] to [0006]<br>(Family: none) | 1-3 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>22 February, 2008 (22.02.08) | Date of mailing of the international search report<br>04 March, 2008 (04.03.08) |
|---|---|
| Name and mailing address of the ISA/<br>Japanese Patent Office | Authorized officer |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001271836 A